# EUROPEAN PATENT SPECIFICATION

(11) **EP 2 174 738 B1**
(45) Date of publication and mention of the grant of the patent: **02.04.2014**
(21) Application number: 09172407.0
(22) Date of filing: 07.10.2009
(51) Int. Cl.: B23D 47/00

(54) **Annular blade saw device**
Ringkreissägevorrichtung
Dispositif de scie à lame annulaire

(30) Priority: 07.10.2008 US 103463 P
(43) Date of publication of application: 14.04.2010
(73) Proprietor: Campeau, Stéphane, Limoges, ON K0A 2M0 (CA)
(72) Inventor: Campeau, Stéphane, Limoges, ON K0A 2M0 (CA)
(74) Representative: Marles, Alan David

(56) References cited:
- EP-A- 0 400 511
- EP-A- 1 479 470
- EP-A- 2 103 372
- FR-A- 804 061
- GB-A- 2 095 362
- SE-C- 70 233
- US-A- 4 352 241
- DATABASE WPI Week 197623, Derwent Publications Ltd., London, GB; AN 1976-F2769X -& SU 480 543 A1 ((PRPO ) PERM POLY) 13 November 1975 -& SU 480 543 A1 15 August 1975 (1975-08-15)

## Description

### FIELD OF THE INVENTION

The present invention generally relates to a centerless saw device according to the preamble of claim 1.

Such a centerless saw device is known from EP 2 103 372 A1.

### BACKGROUND OF THE INVENTION

Circular saw devices typically involve a circular or disc blade having an axial perforation or hole in its center. The blade is mounted to the blade using a shaft extending through the center hole and rotation thereof is driven by holding members concentrically mounted on the shaft and frictionally engaging the side faces of the blade.

Due to the presence of the shaft and of the holding members, the depth of cut of circular saws tends to be limited to less than the radius of blade. Therefore, some have come up with circular saw configurations where an annular blade is eccentrically driven. Such a configuration is described in United States Patent Nos. 4,352,241, 4,472,880 and 4,793,065.

Briefly, these documents describe saw configurations where an annular blade is positioned between opposed rollers contacting the lateral faces of the blade. A driving roller in engaging the inner edge of the annular blade and rotation thereof drives the rotation of the blade about a virtual rotation axis. While such configurations allow increasing the depth of cut beyond the center of the blade, additional torque on the blade is required as the blade cuts deeper in the material. As the surface of the blade engaged by the drive rollers of the saw described in the prior art is very limited, slippage in-between the drive and the saw blade have become a problem, thereby functionally limiting the depth of the cut.

EP-A-2103372 describes an annular saw having an annular blade and two drive wheels on either side of the blade driven in countersense rotation, the blade being held between the two drive wheels by two guide wheels which contact the inside circumference of the blade. This design is plagued by vibration and oscillation as the blade rotates, due to the tremendous rotational forces and the nature of the concrete that the saw is intended to cut. As a result, the oscillation may result in the blade buckling and will make the saw very uncomfortable to hold.

EP-A-0400511 discloses an annular saw having a drive wheel and inner rim portion of the blade, both of rubber, to increase friction between drive mechanism and blade. Rubber at high speed and high friction may heat a great deal and break down, therefore such an annular saw design would be limited in rotational speed. Metal on metal would not be subject to breakdown, and would provide longer wear, although in previous implementations metal surfaces result in slippage. At higher speeds, without a damping mechanism this design would also be prone to vibration and oscillation.

Other annular saw configuration have been reported, where an annular blade is driven by a roller frictionally engaging one lateral face of the blade. Again, these configurations of the prior art tend to be unsatisfactorily since they do not overcome torque-related issues.

It would thus be advantageous to be provided with an annular saw capable of cutting beyond the rotation axis or center of the annular blade while maintaining sufficient torque between the drive rollers and the blade to satisfactorily enable such cutting depth.

### SUMMARY OF THE INVENTION

In order to address the above and other drawbacks, and in accordance with the present invention, there is disclosed a centerless saw device defined by the features of claim 1. Further preferred embodiments are defined by the features of dependent claims 2-8.

These and other objects, advantages and features of the present invention will become more apparent to those skilled in the art upon reading the details of the invention more fully set forth below.

### BRIEF DESCRIPTION OF THE DRAWINGS

Having thus generally described the nature of the invention, reference will now be made to the accompanying drawings, showing by way of illustration an illustrative embodiment thereof, and in which:

FIG. 1 is a front left perspective view of a centerless saw device with the cover removed;

FIG. 2 is a side view of the centerless saw device, with the cover removed;

FIG. 3 is a front left perspective view of the centerless saw device, with the cover in place;

FIG. 4 is a side view of the centerless saw device, with the cover in place;

FIG. 5 is a side cut-away view of a pair of spur gears;

FIG. 6 is a rear cut-away view of a spur gear assembly according to;

FIG. 7 is an enlarged exploded view of a cutting assembly, showing a spur gear housing, a mounting block and a pair of drive rollers;

FIG. 8 is a partial cross-section view of the cutting assembly, shown from reference marked as "8" in FIG. 2, according to the embodiment of the present invention;

FIG. 9 is partial cross-section view of the cutting assembly, viewing through the cover; and

FIG. 10 is a detail of one aspect of the cutting assembly, showing the blade and the drive rollers.

### DESCRIPTION OF THE ILLUSTRATIVE EMBODIMENT

The description which follows, and the embodiments described therein are provided by way of illustration of an example, or examples of particular embodiments of principles and aspects of the present invention. These examples are provided for the purpose of explanation and not of limitation, of those principles of the invention. In the description that follows, like parts are marked throughout the specification and the drawings with the same respective reference numerals.

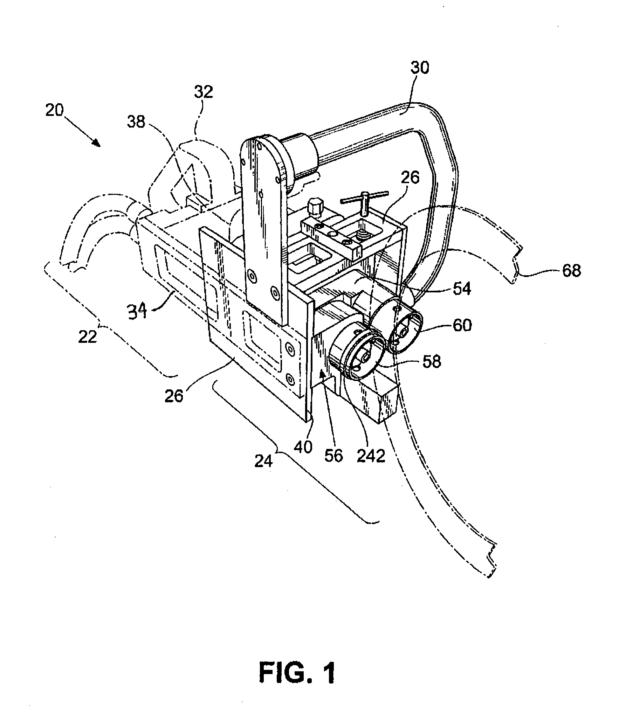

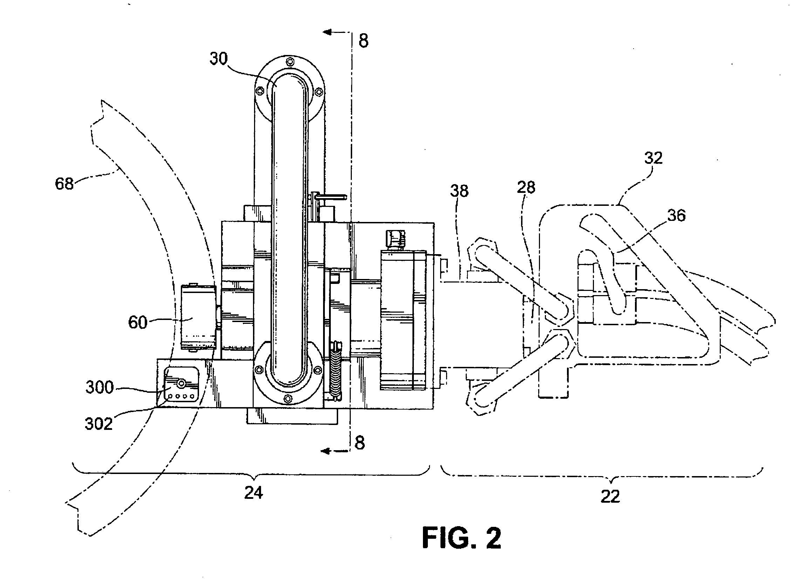

With reference to FIGS. 1 and 2, a centerless handheld saw according to one embodiment of the present invention is shown using reference numeral 20. In this embodiment, the saw 20 comprises a drive assembly 22 and a cutting assembly 24 mounted to the drive assembly 22 by frame members 26.

With further reference to FIGS. 1 and 2, the drive assembly 22 comprises an hydraulic motor 40 mounted in a housing 28. Provided on the housing 28 is a plurality of handles 30, 32 for maneuvering the saw 20 and controls 36 (not shown) for controlling the throttle of the motor 40, and a bracket 34 for mounting the frame member 26 to the housing 28. Extending from the housing 28 is a drive shaft 94 (not shown) having a first end coupled to the motor and a second end extending from the motor housing 28 to the cutting assembly 24.

With further reference to FIGS. 1 and 2, while in this embodiment the cutting assembly 24 is coupled to a handheld driving assembly, a person skilled in the art will appreciate that such a cutting assembly 24 may also be coupled to different types of drive assemblies. For instance, the cutting assembly 24 could be mounted in table saw or compound saw configurations. Further, the cutting assembly 24 may be configured to be driven, for instance, by an electric or a gas motor.

With further reference to FIG. 1, the cutting assembly 24 comprises, from upstream to downstream (i.e. from the back end 38 of the frame 26 toward the front end thereof), a pivoting spur gear assembly 54 connected to the drive shaft 94 (not shown) and a mounting block 56 mounted to the frame 26 and connected to the pivoting spur gear assembly 54 as best described below.

With reference to FIGS. 1 to 4, the cutting assembly 24 further comprises first and second drive rollers 58, 60 operatively connected to, and driven by, the pivoting spur gear assembly 54, a cutting assembly cover 62 mounted to the front end of the frame 26 by means of a mounting bracket 52. The cover permits rotation of the annular blade 68 through its body, and a pair of guide wheel assemblies 64, 66 mounted to the cover 62, which guide and facilitate the movement of the annular blade 68. Sandwiched between the driving rollers 58, 60 and retained by the guide wheel assemblies 64, 66 is an annular blade 68. The cover 62 prevents material from entering the cutting assembly 24. Guide wheel assemblies 64, 66 facilitate the rotation of the annular blade and prevent the annular blade 68 from leaving the cutting assembly 24 and causing harm to the user. A blade guard 80 serves to protect the user's hands from the spinning annular blade 68. The guard 80 is affixed to the mounting bracket 52 by means of a bolt through the guard's mounting plate 82, which is screwed through the mounting bracket into the frame 26 and also serves to fasten the cover 62 on to the frame 26.

With further reference to FIG. 2, the water jet 300 is affixed to mounting block 56 and is positioned perpendicular to the rotation of the annular blade 68, such that it is able to spray water on the blade as it turns. In the present example, the water jet 300 contains four nozzles 302, each of which sprays pressurized water. This water jet 300 cools and lubricates the blade 68 and cutting assembly 24 generally, as well as cleaning the circular recess 362 in the annular blade 68 of residue and dust.

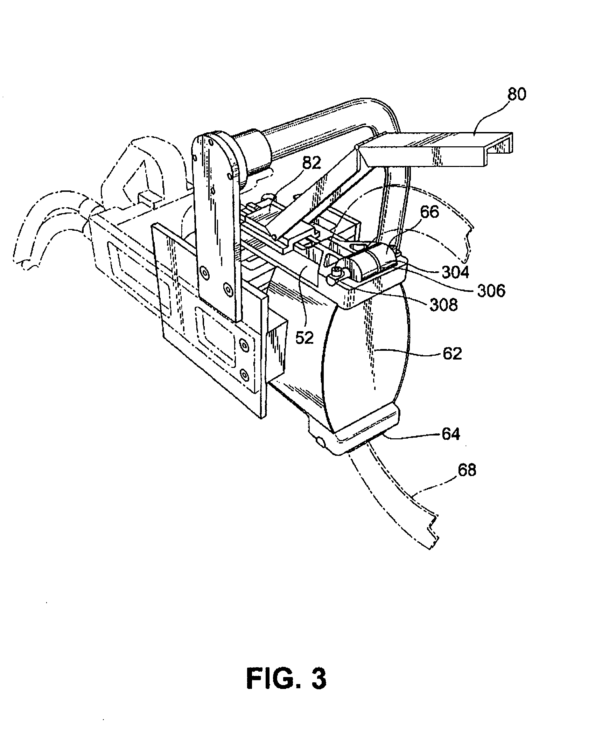

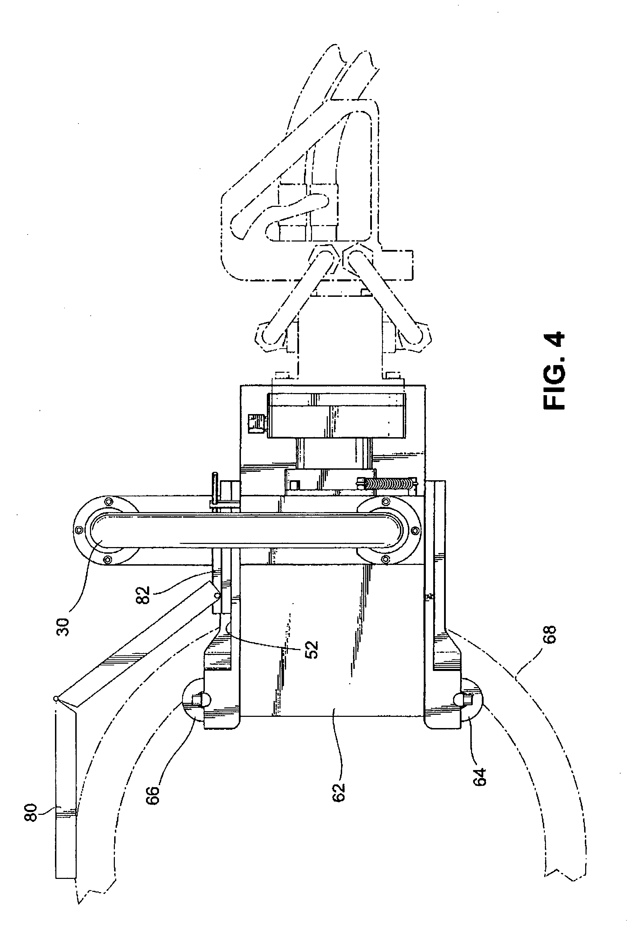

Referring to FIGS. 3 and 4, the guide wheels assemblies 64, 66 will be described. The guide wheel assemblies 64, 66 being similar, only assembly 66 will be described. A person skilled in the art will appreciate that a similar description also applies to assembly 64. The guide wheel assembly 66, mounted within the corner of the cover 62 at the lower end of mounting bracket 52, comprises a cylindrical roller 304 containing a circumferential groove 306 at its midpoint. The groove 306 is sufficiently wide to accommodate the inside edge of the annular blade 68. The roller 304 is rotatably mounted on an axle 308 by means of one or more roller bearings (not shown), which permit the roller 304 to rotate freely on the axle 308. The water provided by the water jet 300 also serves to lubricate said roller bearings.

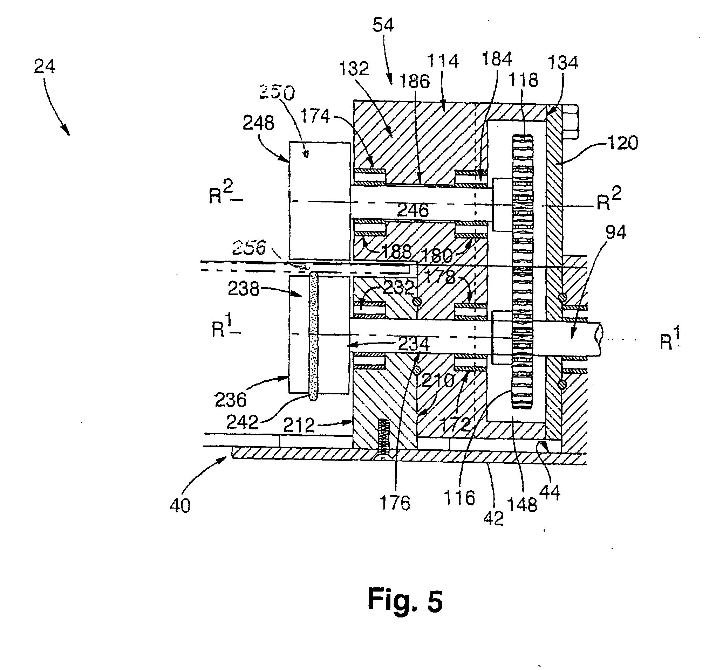

With reference to FIG. 5, the spur gear assembly 54 comprises a housing 114 adapted for receiving therein a pair of spur gears 116,118 operatively connected to the drive shaft 94 and a back plate 120 for closing the housing 114, as best described below. Further through the back plate 120 is a circular hole adapted for receiving therein the second end of the drive shaft 94, as best described below.

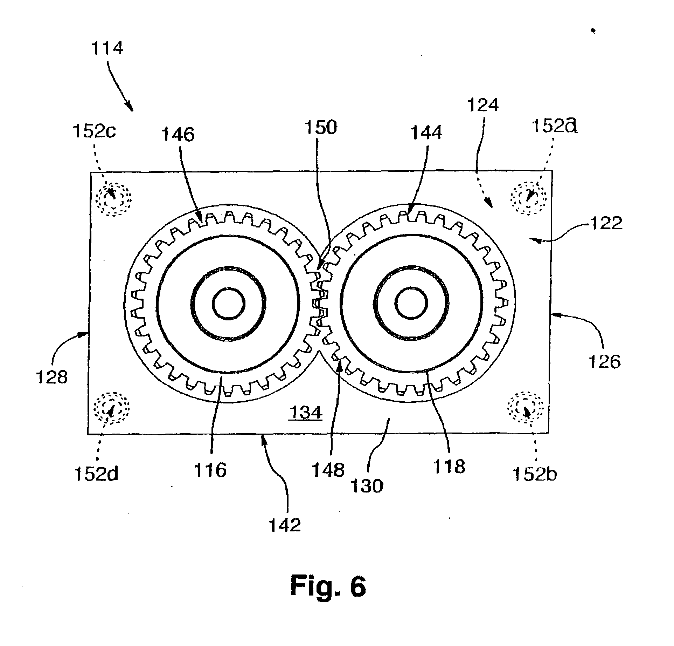

With reference to FIG. 6, a view of the back face 134 of the housing 114, with the back plate 120 (not shown) removed, is shown as a rear view of the spur gear assembly 54 shown in FIG. 5, looking in through the back of the housing 114. The front 130 of the back face is the portion to which the back plate 120 (not shown) is affixed. For convenience, the back 124 of the back face 134, the top 126, the bottom 128 and the right side 142 are all labeled. Within the back face 134 is a pair of generally cylindrical recesses 144, 146 defining together a spur gear chamber 148 adapted for receiving therein the spur gears 116,118. The circular recesses 144, 146 are positioned in a side-by-side relationship and portions thereof overlap to define an opening 150 between them for allowing the spur gears 116,118 to engage one another. There are four screw holes 152*a* - 152d by means of which the back plate 120 is fastened to the back face 134 of the housing 114.

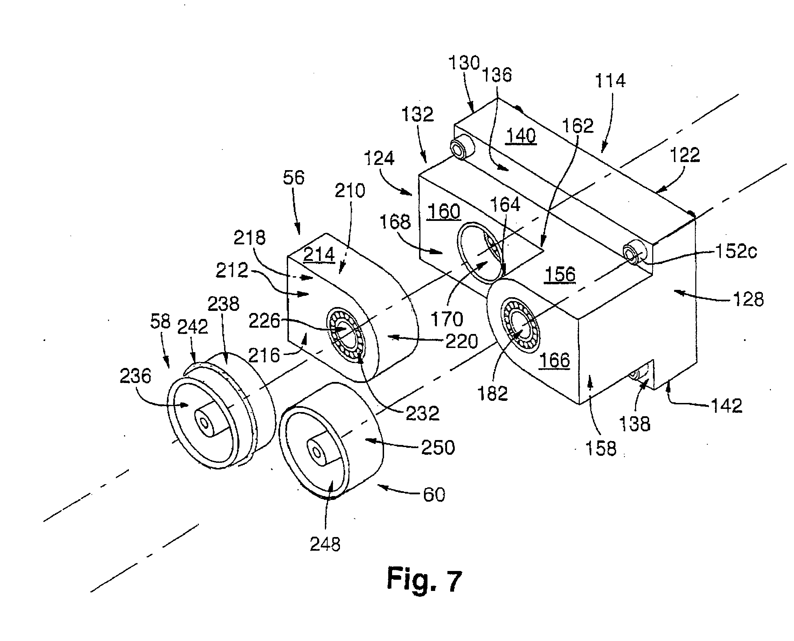

With reference to FIG. 7, the generally L-shaped front portion 132 of the housing 114 will now be described. In one example of the present invention, the front portion 130 comprises a L-shaped top face 156, a L-shaped bottom face 158, a rear face 122 and first front face 160 extending between the top and bottom faces 156,158, from the left face 124 of the housing 114 to a first intermediate region 162 located between the left and right side faces 124, 128. The front portion 132 also comprises a curved lateral face 164 extending frontwardly from the first front face 160 in a perpendicular relationship thereto, at the intermediate location 162. Connecting the top and bottom faces 156,158 and extending between the lateral face 164 and the right side face 128 of the housing 114 is a second front face 166 defining the frontmost portion of the housing 114. In this example, the second face is parallel to the first face 160 (i.e. perpendicular to the side faces 126,128 of the housing 114 respectively).

With further reference to FIG. 7, the L-shape of the front portion 132 defines a seat 168 for receiving therein the mounting block 56 as it will be best described below. More specifically, the seat 168 is bordered by the first front face 166 (on the back of the seat 168) and by the lateral face 164 (on the right side of the seat 168).

As best shown in FIGS. 5 and 7, the housing 114 is provided with a first flanged hole 170 extending axially from the circular recess 144 to the first front face 160 of the front portion 132. In one example, the hole 170 and the recess 144 share a common axis R¹-R¹, perpendicular to the first front face 160 and located halfway between the top and bottom faces 156,158 of the front portion 132.

With further reference to FIGS. 5 and 7, the flanged hole 170 comprises a circular back seat 172 extending frontwardly from the recess 144 and a main portion 176 extending between the back seat 172 and the first front face 160. The main portion 176 of the hole 170 has a diameter D¹ while the seat 172 has a larger diameter, D². Received in the seat 172 is an annular roller bearing 178 having an outer diameter corresponding to D² and an inner diameter corresponding to the diameter D¹ of the main portion 176. The presence of the bearing 178 is aimed at facilitating the rotation of the spur gears 116, 118 and drive rollers 58, 60 during operation of the saw 20, as it will become apparent below.

With further reference to FIGS. 5 and 7, the housing 114 is further provided with a second flanged hole 182 extending from the recess 146 to the second front face 166 of the front portion 132. Similarly to the first flange hole 170, the second flanged hole 182 extends axially from the recess 146 and share a common axis R²-R² therewith, perpendicular to the second front face 166 and located halfway between the top and bottom faces 156,158 of the front portion 132. In one example, the axes R¹-R¹ and R²-R² of the holes 170, 182 extend parallel to one another and are aligned along a horizontal plan.

With further reference to FIGS 5 and 7, the second flanged hole 182 comprises a circular back seat 184 extending frontwardly from the recess 146, a front seat 174 extending backwardly from the second front face 166 and a main portion 186 extending between the back and front seats 184, 174. The main portion 186 of the hole 182 has a diameter D¹ while the seats 184 have a larger diameter, D². Received in the seats 184, 174 are annular roller bearings 184, 180 similar to the bearing 178. As such, the bearings 188, 180 each have an outer diameter corresponding to D² and an inner diameter corresponding to the diameter D¹ of the main portion 186.

In one example, the spur gear housing 114 is monolithic housing machined from a single block of aluminum. A person skilled in the art will however appreciate that the back and front portions of such housing may be distinct components assembled to one another by welding, screws or nuts and bolts.

With further reference to FIG. 5, the drive shaft 94 turns spur gear 116 in a clockwise direction, and accordingly spur gear 118 is driven in a counterclockwise direction, in turn driving the spur shaft 246. In one embodiment of the present invention, the spur gears have a 1:1 ratio to provide a synchronized rotation of the gears 116, 118. In the present example, the chamber 148 is filled with oil for lubricating the spur gears 116, 118 and is closed by back plate 120, preventing debris from entering the spur gear assembly 54.

With further reference to FIG. 7, mounted in the seat 168 of the housing 114 is the mounting block 56. The mounting block 56 has a back face 210, a front face 212 and top and bottom faces 214, 216. The mounting block 56 also comprises a left flat face 218 and a curved right face 220. A circular flanged hole 226 extends between the back and front face 210,212 of the mounting block 56. The flanged hole 226 comprises a main portion having a diameter D¹ and a circular front seat (not shown) extending backwardly from the front face 212. The seat 230 has a larger diameter, D². Received in the seat (not shown), is an annular roller bearing 232 having an outer diameter corresponding to D² and an inner diameter corresponding to the diameter D¹of the main portion (not shown). In one embodiment, the depth of the mounting block 56 (i.e. the distance between the back and front faces 210,212) corresponds to the depth of the seat 168 of the spur gear housing 114 (i.e. the distance between the first and second front faces 160,166).

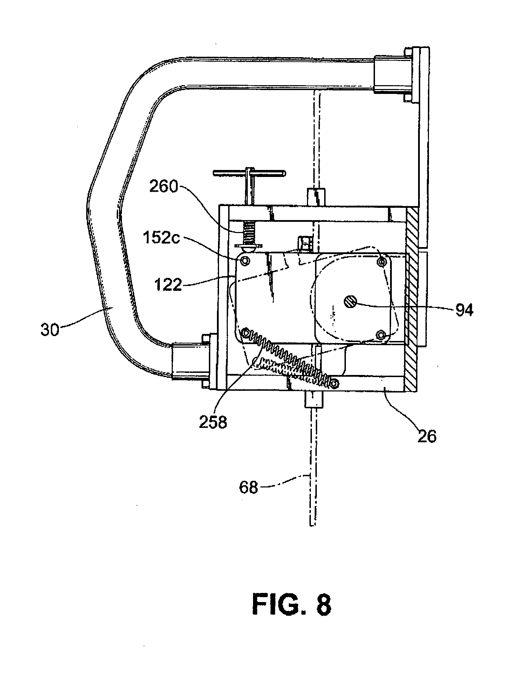

With further reference to FIGS. 5 and 7, the left face 126 of the spur gear housing 114 and the back plate 120 mounted thereto are spaced apart from the right face 44 of the frame 26. The housing 114 and the back plate 120 mounted thereto are not attached to the frame 26 but are rather maintained in position by the drive shaft 94. As the drive shaft 94 extends sequentially, from upstream to downstream, through holes 170 and 226, of the spur gear housing 114 and the mounting block 56 (also mounted to the frame 26), respectively, the housing 114 of the spur gear assembly 54 can pivot along the rotation axis R¹-R¹ of the drive shaft 94. In other words, this configuration enables the right side of the spur gear housing 114 to pivot upwardly and downwardly between an upper position and a lower position, as shown in FIG. 8.

Referring to FIG. 8, which provides a partial cross-sectional view of the cutting assembly 24 according to the embodiment of the invention, as seen from the rear of housing 114, a first tension spring 258 is mounted by a first end to the rear face 122 of the housing 114, proximal to the right face 128 thereof, and by a second end to the frame 26. The tension spring 258 helps maintaining the housing 114 in its lower position thereby ensuring proper contact between the drive rollers 58, 60 (not shown) and the blade 68, as best described below. According to the invention, a damping spring 260 maintains opposite pressure on the housing 114, compared with spring 258, damping the vibration and oscillation that occurs between drive rollers 58, 60 (not shown), when the blade 68 is spinning. The damping spring 260 is mounted on a "T" handle, which allows the operator to compress the damping spring 260 and lock it in such a compressed state, by pulling the handle and turning it once pulled, so as to freely move the housing 114, during servicing of the cutting assembly 24.

Returning to FIG. 5, the rectangular front end of the drive shaft 94 protrudes frontwardly from the front face 212 of the mounting block 56 for operatively mounting the drive roller 58 to the drive shaft 94 using a screw-type fastener, once the housing 114 and the mounting block 56 are mounted to the frame 26.

Referring to FIGS. 1, 5 and 10, the drive roller 58 is a generally cylindrical body comprising a circular back face 234, a countersunk circular front face 236 and a curved face 238 extending therebetween. Extending axially from the back face 234 to just short of the front face 236 is a rectangular hole (not shown) having a width D¹. An annular protrusion 242 extends radially on the curved face 238 of the roller 58 for guiding the annular blade 68. In order to place the blade 68 between rollers 58, 60, roller 60 must be removed by removing the screw 254 from the threaded socket on the front tip of the spur shaft 246, which screw is holding roller 60 in place. The blade 68 may then be slid in between the roller 58 and spur shaft 246. Once the blade 68 is in position, the annular protrusion 242 enters a corresponding groove on the side of annular blade 68. Once the roller 60 is slid back onto spur shaft 246, and the screw 254 is tightened into the threaded socket on the front tip of the spur shaft 246, said groove forms an interface with the annular protrusion 242 such that the blade cannot leave rollers 58, 60 once mounted therebetween, without removal of roller 60.

With further reference to FIGS. 1, 5 and 10, the roller 58 is mounted to the rectangular front end of drive shaft 94 by means of a corresponding rectangular recess in the back face 234 of the roller, said back face 234 being adjacent to the front face 212 of the mounting block 56. The roller 58 is maintained into position using a screw 252 fastened into the threaded socket located in the front end of the drive shaft 94. For ensuring proper rotation of the drive roller 58 along the axis R¹-R¹ and preventing slippage, the rectangular recess in the back face 234 engages the rectangular end of the drive shaft 94.

With further reference to FIGS. 5, 7 and 10, similarly to drive roller 58, drive roller 60 is a generally cylindrical body comprising a circular back face, a countersunk circular front face 248 and a curved face 250 extending therebetween. Extending axially from the back face to just short of the front face 248 is a rectangular recess. The roller 60 is mounted by means of said rectangular recess on the rectangular front end of the spur shaft 246, the back face thereof being adjacent to the second front face 166 of spur gear housing 114. The drive roller 60 is maintained into position using a screw 254 fastened into the threaded socket located in the front end of the spur shaft 246. For ensuring proper rotation of the drive roller 60 along the axis R²-R² while the spur shaft 246 is rotated, the end of the spur shaft 246 which enters the rectangular recess in drive roller 60 is rectangular in cross-section.

As best shown in FIG. 5, a space 256 is defined between the curved faces 238, 250 of the drive rollers 58, 60. This space 256 is adapted for the curved faces 238, 250 of the drive rollers 58, 60 to frictionally engage the annular blade 68, as it will become apparent below. As such, the diameter of the drive rollers 58, 60 may be adjusted according to the thickness of the blade 68. However, where such adjustment occurs, the diameter of the first drive roller 58 preferably remains similar the diameter of the second drive roller 60 for the driving speed of the rollers 58 and 60 to remain identical. Because the spur gear housing 114 can pivot along the axis R¹-R¹, as shown in FIG. 5, the distance 256 between the curved faces 238,250 of the drive rollers 58, 60 can be modified as the saw 20 is operated, as will become apparent below.

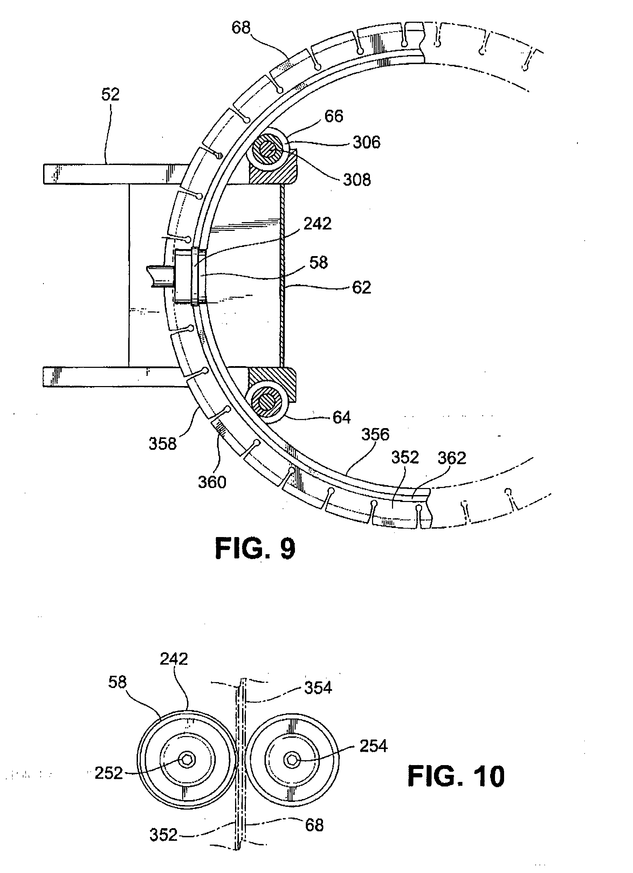

With reference to FIG. 9, the annular blade 68 will now be described. The blade 68 comprises left and right annular faces 352, 354 (not shown) respectively a circular inner edge 356 and a circular outer edge 358 defined on or projecting radially from the outer edge 358 is a plurality of carbide or diamond teeth 360 adapted for cutting materials such as concrete, asphalt, wood and the like. In one embodiment, the left face 352 of the blade 68 provided with is a circular recess 362. The recess 362 is adapted for receiving therein the annular protrusion 242 of the drive roller 60.

With reference to FIGS. 9 and 10, once assembled on the saw 20, the inner edge 356 of the blade 68 is received on the groove 306 of guide wheels 64, 66 (best shown in FIGS. 3 and 4) and is sandwiched between the drive rollers 58, 60 (best shown in FIGS. 1, 5, 7 and 10). More specifically, the curved face 238 of the drive roller 58 contacts the left face 352 of the blade 68, the annular protrusion 242 extending in the circular recess 362, while the curved face 250 of the roller 60 contacts the right face 350 of the blade 68. The presence of the spring 258 ensures that a proper contact is maintained between the drive rollers 58, 60 and the faces 352, 354 of the blade 68 during the operation of the saw 20, and damping spring 260 prevents oscillation of the drive rollers 58, 60 while blade 68 is spinning.

With further reference to FIG. 9, as the guide wheels 64, 66 are located proximal to the drive rollers 58, 60, the major portion of the blade 68 can be used for cutting. This provides the saw 68 with cutting capabilities extending beyond the rotation axis of the blade 68, which may not be possible with saws of the prior art, where a driving shaft extends along the rotation axis of the blade and prevents the blade from cutting beyond the rotation axis of the blade.

Having described the general components of the saw 20, the assembly of the blade 68 to the saw 20 and its operation will now be described. With reference to FIGS. 1, 3 and 5, the cover 62 is removed so that the drive rollers 58, 60 are exposed. The operator then widens the gap 256 between rollers 58 and 60 by pivoting the spur gear housing 114. The annular blade 68 is then placed between the drive rollers 58, 60, and the annular protrusion 242 on drive roller 58 enters a corresponding groove (not shown) on the side of annular blade 68. Once the pivoting spur gear housing 114 is released, the spring 258 pulls the gap 256 closed, to form an interface with the annular protrusion 242 such that the blade cannot leave rollers 58, 60 once mounted therebetween.

With further reference to FIGS. 1, 3 and 5, in this position, the curved faces 238, 250 of the drive rollers 58, 60 contact the left and front faces 352, 354 of the blade 68 and the protrusion 242 extends in the recess 362. Once the blade 68 is properly positioned between the drive rollers 58, 60, the cover 62 is replaced, and the blade 68 contacts guide wheel assemblies 64, 66, so that the inside edge of the annular blade 68 is positioned within the groove 306, preventing the blade from sliding side-to-side along the roller 306. As shown in FIG. 3, the mounting brackets 52 of cover 62 are then fastened to the frame 26 by means of a bolt fastened through the guard's mounting plate 82, in order to prevent the unintentional removal of cover 62.

With reference to FIGS 1, 3 and 5, the blade 68 being now in position between the drive rollers 58, 60 and supported by the guide wheel assemblies 64, 66, the saw 20 can be operated. The motor of the drive assembly is actuated and speed thereof is controlled by the operator. The motor causes the drive shaft 94 coupled to the motor to rotate, which in turn drives countersense rotation of the spur gears 116, 118. More specifically, the spur gear 116 rotates counterclockwise while the spur gear 118 rotates clockwise, therefore driving the rollers 58, 60 to rotate accordingly in a 1:1 ratio.

With reference to FIGS. 5 and 9, the curved faces 238, 250 of the drive rollers 58, 60 frictionally engage the left and right faces 352, 354 of the blade 68 for causing rotation thereof about the virtual axis through the centre of the blade diameter. The protrusion 242 of the drive roller 58 engaged in the recess 362 of the blade enhances the frictional engagement of the roller 58 with the blade 68, thus increasing the efficiency of the drive rollers 58, 60 and providing the saw 20 with sufficient torque for enabling cutting action the midway point of the diameter of the blade, and allows cutting action to continue until the saw is embedded up to the cover 94. Further, the protrusion 242 engaged in the recess 362 prevents the blade 68 from moving backwardly during the operation of the saw 20, which backward movement of the blade 68 could damage the other components of the saw (e.g. the spur gear housing 114 located behind the blade). In an alternate embodiment, the blade 68 may be provided with one recess on each of its faces 352, 354 (i.e. one recess on the left face 352 and one recess of the right face 354) and both rollers 58, 60 may be provided with corresponding annular protrusions similar to protrusion 242. In a further alternate embodiment, the blade may have more than one recess on each of its faces 352, 354 (i.e. multiple recesses on the left face 352 and multiple recesses of the right face 354) and both rollers 58, 60 are provided with corresponding annular protrusions similar to protrusion 242. In another embodiment, the one or more recesses on each of the left and right faces 352, 354 may be staggered or offset with each other, so as to minimize the weakening of the structure of the annular blade. In a further alternate embodiment, the curved faces 238 ,250 of the drive rollers 58, 60 could be layered with rubber or the like to further enhance frictional engagement with the blade 68. In yet a further embodiment, the circular inner edge 356 of the blade 68 is reinforced with more material or a stronger material, such as high-carbon steel, so that it is more durable and does not wear down too quickly.

With reference to FIGS. 5 and 9, as it will be apparent for a person skilled in the art, the countersense rotation of the rollers 58, 60 will cause the blade 68 to rotate counterclockwise in this configuration. This person will appreciate that the saw could be configured differently for the blade to rotate clockwise. With further reference to FIG. 9, a person skilled in the art will appreciate that this configuration of the guide wheels enables using blades having different configurations, for instance blades having different diameters. In one embodiment, the blade has an inner diameter (i.e. the diameter defined by the inner curved edge) ranging from about 10 inches and 20 inches and an outer diameter ranging from about 3 to about 50 inches, preferably between about 5 and 24 inches, and more preferably between about 10 to 20 inches. Where the inner diameter of the blade 68 is smaller, it may be desirable to rearrange the guide wheel assemblies 64, 66 in a compact configuration, wherein they are moved closer to one another by means of different cover than that specified in the present example. The present example encompasses blade sizes with outside diameters of up to and greater than 5 feet, these large blades typically being employed in a table-saw-like configuration, used for cutting granite for example.

## Claims

1. A centreless saw device (20) comprising:
(a) a frame (26) having one or more handles and a drive assembly (22) comprising a motor (40);
(b) a cutting assembly (24) mounted to said frame (26) and operatively connected to said motor (40) by a drive shaft (94), the cutting assembly (24) comprising:
(i) a pivoting spur gear assembly (54), having a mounting block (56) mounted to the frame;
(ii) at least a first drive roller (58) rotatably mounted to the pivoting spur gear assembly (54) for rotation about a first rotation axis;
(iii) at least a second drive roller (60) rotatably mounted to the pivoting spur gear assembly (54) so as to rotate around a second drive axis, the second rotation axis being parallel to the first rotation axis, said spur gear assembly (54) pivoting so as to vary a gap between the first and second rollers (58, 60).
(iv) a tension spring (258) connected between the spur gear assembly (54) and said frame (26) wherein the drive assembly (22) is operatively connected to said pivoting spur gear assembly (54), said drive assembly is capable of being driven by the motor (40) urging rotation of the pivoting spur gear assembly (54), and said pivoting spur gear assembly urging rotation of said first and second drive rollers (58, 60), the rotation of said first and second drive rollers adapted for urging rotation of a blade (68), and wherein said second drive roller (60) is biased toward said first drive roller (58) by means of the tension spring (258) **characterised in that** the cutting assembly further comprises a damping spring (260) mounted between the frame (26) and the spur gear assembly (54) wherein the damping spring (260) exerts pressure opposite to that of the tension spring (258) to dampen vibration of the first and second drive rollers (58, 60) from movement of the blade (68) mounted therebetween.

2. The centreless saw device of claim 1, further comprising at least two guide wheels (64, 66) capable of rotating operatively engaging the inner circular edge (356) of an annular blade (68) for guiding the annular blade.

3. The centreless saw device of claim 1, wherein the pivoting spur gear assembly (54) pivots along a rotation axis of the drive shaft (94).

4. The centreless saw device of claim 1, further comprising a water jet (300) positioned so as to spray water on said annular blade (68) and cutting assembly (24) for the purpose of cooling and lubricating the annular blade and cutting assembly.

5. The centreless saw device of claim 1, wherein the motor (40) is selected from the group consisting of an hydraulic motor, an electric motor or a gas motor.

6. The centreless saw device of claim 2, further comprising a cover (62) removable affixed to said frame (26), for protecting said cutting assembly (24), to which cover the at least two guide wheels (64, 66) are rotatably attached.

7. The centreless saw device of claim 6, wherein each guide wheel (64, 66) is formed of a cylindrical roller (304) having a circumferential groove (306) rotatably mounted on an axle (308), which groove has a width and profile corresponding to the width of said annular blade (68), and said guide wheels (64, 66) are each mounted within a corner of said cover (62).

8. The centreless saw device of claim 1, wherein said first drive rollers (58) further comprises an annular protrusion (242) extending radially on a curved face (238) of said first drive roller (58), and the annular blade (68) has a radial recess (362) on one side, which recess corresponds with the annular protrusion (242) of the first drive roller such that the protrusion is capable of entering the corresponding recess.

## Patentansprüche

1. Mittenfreie Sägevorrichtung (20), umfassend:
(a) einen Rahmen (26) mit einem oder mehreren Griffen und einer Antriebsanordnung (22), die einen Motor (40) aufweist,
(b) eine Schneidanordnung (24), die an dem genannten Rahmen (26) montiert und über eine Antriebswelle (94) funktionell mit dem genannten Motor (40) verbunden ist, wobei die Schneidanordnung (24) Folgendes aufweist:
(i) eine schwenkbare Stirnradgetriebeanordnung (54), die einen am Rahmen montierten Befestigungsblock (56) hat,
(ii) wenigstens eine erste Antriebsrolle (58), die zur Drehung um eine erste Drehachse drehbar an der schwenkbaren Stirnradgetriebeanordnung (54) montiert ist,
(iii) wenigstens eine zweite Antriebsrolle (60), die drehbar an der schwenkbaren Stirnradgetriebanordnung (54) montiert ist, um sich um eine zweite Antriebsachse zu drehen, wobei die zweite Drehachse parallel zur ersten Drehachse ist, wobei die genannte Stirnradgetriebeanordnung (54) schwenkbar ist, um einen Abstand zwischen der ersten und der zweiten Rolle (58, 60) zu variieren,
(iv) eine Spannfeder (258), die zwischen der Stirnradgetriebeanordnung (54) und dem genannten Rahmen (26) angebracht ist, wobei die Antriebsanordnung (22) funktionell mit der genannten schwenkbaren Stirnradgetriebeanordnung (54) verbunden ist, wobei die genannte Antriebsanordnung vom Motor (40), der die Drehung der Stirnradgetriebeanordnung (54) antreibt, angetrieben werden kann und wobei die genannte schwenkbare Stirnradgetriebeanordnung die Drehung der genannten ersten und der genannten zweiten Rolle (58, 60) antreibt, wobei die Drehung der genannten ersten und zweiten Antriebsrolle zum Antreiben der Drehung eines Sägeblatts (68) ausgeführt ist, und wobei die genannte zweite Antriebsrolle (60) mittels einer Spannfeder (258) in Richtung auf die genannte erste Antriebsrolle (58) vorgespannt ist, **dadurch gekennzeichnet, dass** die Schneidanordnung ferner eine zwischen dem Rahmen (26) und der Stirnradgetriebeanordnung (54) montierte Dämpfungsfeder (260) aufweist, wobei die Dämpfungsfeder (260) Druck ausübt, der dem der Spannfeder (258) entgegengesetzt ist, um die Vibrationen der ersten und zweiten Antriebsrolle (58, 60) von der Bewegung des zwischen ihnen montierten Sägeblatts (68) zu dämpfen.

2. Mittenfreie Sägevorrichtung nach Anspruch 1, die ferner wenigstens zwei Führungsräder (64, 66) aufweist, die sich unter funktionellem Eingriff mit dem inneren kreisförmigen Rand (356) eines ringförmigen Sägeblatts (68) zum Führen des ringförmigen Sägeblatts drehen können.

3. Mittenfreie Sägevorrichtung nach Anspruch 1, wobei die schwenkbare Stirnradgetriebeanordnung (54) an einer Drehachse der Antriebswelle (94) entlang geschwenkt wird.

4. Mittenfreie Sägevorrichtung nach Anspruch 1, die ferner einen Wasserstrahl (300) aufweist, der so positioniert ist, dass er zum Kühlen und Schmieren des ringförmigen Sägeblatts und der Schneidvorrichtung Wasser auf das genannte ringförmige Sägeblatt (68) und die Schneidvorrichtung (24) spritzt.

5. Mittenfreie Sägevorrichtung nach Anspruch 1, wobei der Motor (40) aus der Gruppe bestehend aus einem Hydraulikmotor, einem Elektromotor und einem Gasmotor ausgewählt ist.

6. Mittenfreie Sägevorrichtung nach Anspruch 2, die ferner eine Abdeckung (62) aufweist, die zum Schutz der genannten Schneidanordnung (24) abnehmbar an dem genannten Rahmen (26) befestigt ist, wobei die wenigstens zwei Führungsräder (64, 66) drehbar an dieser Abdeckung angebracht sind.

7. Mittenfreie Sägevorrichtung nach Anspruch 6, wobei jedes Führungsrad (64, 66) von einer drehbar auf einer Achse (308) montierten zylindrischen Rolle (304) mit einer Umfangsnut (306) gebildet wird, wobei die Nut eine Breite und ein Profil hat, die der Breite des genannten ringförmigen Sägeblatts (68) entsprechen, und wobei die genannten Führungsräder (64, 66) jeweils in einer Ecke der genannten Abdeckung (62) montiert sind.

8. Mittenfreie Sägevorrichtung nach Anspruch 1, wobei die genannte erste Antriebsrolle (58) ferner einen ringförmigen Vorsprung (242) aufweist, der auf einer gekrümmten Stirnfläche (326) der genannten ersten Antriebsrolle (58) radial verläuft, und das ringförmige Sägeblatt (68) auf einer Seite eine radiale Aussparung (238) hat, wobei diese Aussparung dem ringförmigen Vorsprung (242) der ersten Antriebsrolle entspricht, so dass der Vorsprung in die entsprechende Aussparung eintreten kann.

## Revendications

1. Dispositif de scie sans centre (20) comprenant :
(a) un cadre (26) ayant une ou plusieurs poignées et un ensemble d'entraînement (22) comprenant un moteur (40) ;
(b) un ensemble de coupe (24) monté sur ledit cadre (26) et relié fonctionnellement audit moteur (40) par un arbre d'entraînement (94), l'ensemble de coupe (24) comprenant :
(i) un engrenage à denture droite pivotant (54), ayant un bloc de montage (56) monté sur le cadre ;
(ii) au moins un premier galet d'entraînement (58) monté de manière rotative sur l'engrenage à denture droite pivotant (54) pour tourner autour d'un premier axe de rotation ;
(iii) au moins un deuxième galet d'entraînement (60) monté de manière rotative sur l'engrenage à denture droite pivotant (54) de manière à tourner autour d'un deuxième axe d'entraînement, le deuxième axe de rotation étant parallèle au premier axe de rotation, ledit engrenage à denture droite (54) pivotant de manière à faire varier un espace entre les premier et deuxième galets (58, 60).
(iv) un ressort de tension (258) reliant l'engrenage à denture droite (54) et ledit cadre (26), l'ensemble d'entraînement (22) étant relié fonctionnellement audit engrenage à denture droite pivotant (54), ledit ensemble d'entraînement étant capable d'être entraîné par le moteur (40) forçant la rotation de l'engrenage à denture droite pivotant (54), et ledit engrenage à denture droite pivotant forçant la rotation desdits premier et deuxième galets (58, 60), la rotation desdits premier et deuxième galets étant adaptée pour forcer la rotation d'une lame (68), et ledit deuxième galet d'entraînement (60) étant poussé vers ledit premier galet d'entraînement (58) au moyen du ressort de tension (258), **caractérisé en ce que** l'ensemble de coupe comprend en outre un ressort d'amortissement (260) monté entre le cadre (26) et l'engrenage à denture droite (54), le ressort d'amortissement (260) exerçant une pression opposée à celle du ressort de tension (258) pour amortir les vibrations des premier et deuxième galets d'entraînement (58, 60) suscitées par le mouvement de la lame (68) montée entre eux.

2. Dispositif de scie sans centre selon la revendication 1, comprenant en outre au moins deux roues de guidage (64, 66) capables de tourner en s'engageant fonctionnellement avec le bord circulaire intérieur (356) d'une lame annulaire (68) pour guider la lame annulaire.

3. Dispositif de scie sans centre selon la revendication 1, dans lequel l'engrenage à denture droite pivotant (54) pivote le long d'un axe de rotation de l'arbre d'entraînement (94).

4. Dispositif de scie sans centre selon la revendication 1, comprenant en outre un jet d'eau (300) positionné de manière à pulvériser de l'eau sur ladite lame annulaire (68) et l'ensemble de coupe (24) afin de refroidir et de lubrifier la lame annulaire et l'ensemble de coupe.

5. Dispositif de scie sans centre selon la revendication 1, dans lequel le moteur (40) est sélectionné dans le groupe comprenant un moteur hydraulique, un moteur électrique et un moteur à gaz.

6. Dispositif de scie sans centre selon la revendication 2, comprenant en outre un capot (62) fixé de manière amovible audit cadre (26) pour protéger ledit ensemble de coupe (24), les deux roues de guidage (64, 66) ou davantage étant fixées de manière rotative audit capot.

7. Dispositif de scie sans centre selon la revendication 6, dans lequel chaque roue de guidage (64, 66) est formée d'un galet cylindrique (304) ayant une gorge circonférentielle et monté de manière rotative sur un axe (308), ladite gorge ayant une largeur et un profil correspondant à la largeur de ladite lame annulaire (68), et chacune desdites roues de guidage (64, 66) étant montée dans un angle dudit capot (62).

8. Dispositif de scie sans centre selon la revendication 1, dans lequel ledit premier galet d'entraînement (58) comprend en outre une saillie annulaire (242) s'étendant radialement sur une face courbe (238) dudit premier galet d'entraînement (58), et la lame annulaire (68) ayant un creux radial (362) d'un côté, ledit creux correspondant à la saillie annulaire (242) du premier galet d'entraînement, de sorte que la saillie est capable d'entrer dans le creux correspondant.
